# EUROPÄISCHE PATENTANMELDUNG

(11) **EP 2 365 014 A1**
(43) Veröffentlichungstag der Anmeldung: **14.09.2011**
(21) Anmeldenummer: 11157576.7
(22) Anmeldetag: 10.03.2011
(51) Int. Cl.: C08G 18/22, C08G 18/28, C08G 18/30, C08G 18/32, C08G 18/66

(54) **Neue witterungsbeständige Polyurethangießmassen, ein Verfahren zu deren Herstellung und deren Verwendung**

(30) Priorität: 12.03.2010 EP 10156413
(71) Anmelder: Rhein Chemie Rheinau GmbH, 68219 Mannheim (DE)
(72) Erfinder: Eiben, Robert, 68623, Lampertheim (DE); Schuster, Peter, 67122, Altrip (DE)
(74) Vertreter: Siegers, Britta

(57) **Zusammenfassung**

Die Erfindung betrifft neue witterungsbeständige Polyurethangießmassen, ein Verfahren zu deren Herstellung und deren Verwendung im Baubereich.

## Beschreibung

Die Erfindung betrifft neue witterungsbeständige Polyurethangießmassen, ein Verfahren zu deren Herstellung und deren Verwendung im Baubereich.

Der Begriff Polyurethangießmassen umfasst dabei Polyurethanschäume und sog. kompakte Polyurethankörper, d.h. nicht geschäumte Körper.

PU-Gießmassen finden vielfältige Anwendungsmöglichkeiten, wobei ein Schwerpunkt sicher im Bereich Polyurethanschäume liegt, die in der Bauindustrie als Montageschaum oder zur Isolation eingesetzt werden.

In den Fällen, in denen die PU- Gießmassen allerdings der Witterung ausgesetzt sind, bedarf es einer speziellen Katalyse. Zudem dürfen keine umweltgefährdenden Stoffe durch Auswaschen in den Boden gelangen. Die schädlichen Bestandteile oder Folgeprodukte des Katalysators müssen fest eingebunden sein, d.h. sie dürfen nicht mit Wasser eluieren, bzw. nur unschädliche Stoffe dürfen eluieren. Der Katalysator darf weiterhin die Verwitterung nicht beschleunigen.

Bislang eingesetzt wurden Sn(II)-Rizinoleate, die aus ihren vielfältigen Anwendungen im z.B. Automobilbereich (im Weichschaumbereich) bekannt sind. Nachteilig ist jedoch hier, dass sich der damit hergestellte Schaum unter Witterungseinflüssen stark zersetzt.

Aufgabe der vorliegenden Erfindung war daher die Bereitstellung von witterungsbeständigeren und idealerweise auch lichtbeständigeren Polyurethangießmassen, die die vorgenannten Nachteile nicht aufweisen und die keine negativen Einflüsse auf die Umwelt haben.

Überraschenderweise wurde nun gefunden, dass durch den Einsatz von Eisen(III)-Acetylacetonat als Katalysator, gelöst in mindestens einem Diamin oder mindestens einem monofunktionellen Polyetherpolyol die entsprechenden PU-Gießmassen witterungs- und lichtbeständiger werden. Fe(III)Acetylacetonat ist gemäß Richtlinie 2002/72/EG in der EU zugelassen für Materialien und Gegenstände, die dazu bestimmt sind, mit Lebensmitteln in Berührung zu kommen, und erfüllt damit auch das Kriterium der Umweltverträglichkeit.

Gegenstand der vorliegenden Erfindung sind somit Polyurethangießmassen, erhältlich durch Umsetzung von
- 100 Teilen mindestens eines Polyetherpolyols,
- 10 - 80 Teilen mindestens eines Di- oder Polyisocyanats in Gegenwart von 0,05 - 5 Teilen einer 0,5 - 10 %igen Lösung von
- Eisen(III)acetylacetonat (Fe(III)Acac) gelöst in
- mindestens einem Diamin oder mindestens einem monofunktionellen Polyetherpolyol gegebenenfalls in Gegenwart von Wasser und/oder mindestens einem Kettenverlängerungsmittel.

Als Polyetherpolyole im Sinne der Erfindung sind bi-/tri- oder höherfunktionelle Polyetherpolyole mit einer OH-Zahl im Bereich von 20 bis 85 mit einem Molekulargewicht von 2000 bis 10 000 einsetzbar.

Die im Sinne der Erfindung einsetzbaren Polyetherpolyole weisen vorzugsweise eine mittlere Hydroxylfunktionalität von 2 (bifunktionell) bis 3 (trifunktionell) auf und bestehen aus mindestens einem Polyhydroxypolyether des Molekulargewichtsbereichs 2000 bis 10 000, vorzugsweise 3000 bis 6000. Diese Angaben bezüglich des Molekulargewichts beziehen sich auf das aus OH-Funktionalität und OH-Gehalt errechenbare Molekulargewicht.

Geeignete Polyhydroxypolyether sind die aus der Polyurethanchemie an sich bekannten Alkoxylierungsprodukte von vorzugsweise di- oder trifunktionellen Startermolekülen bzw. Gemischen derartiger Startermoleküle. Geeignete Startermoleküle sind beispielsweise Wasser, Ethylenglykol, Diethylenglykol, Propylenglykol, Trimethylolpropan oder Glycerin. Zur Alkoxylierung eingesetzte Alkylenoxide sind insbesondere Propylenoxid und Ethylenoxid, wobei diese Alkylenoxide in beliebiger Reihenfolge und/ oder als Gemisch unter den, dem Fachmann geläufigen Reaktionsbedingungen umgesetzt werden können, siehe beispielhaft
EP -A 0652 250.

Auch NH₂-endständige Polyetherpolyole wie vom Typ Jeffamin^{®} der Huntsman International LLC sind einsetzbar.

Im Rahmen der Erfindung sind die folgenden Polyetherpolyole bevorzugt:
- Bifunktionelle Polyetherpolyole sowie trifunktionelle Polyetherpolyole mit OH-Zahlen zwischen 20 und 50 oder Mischungen daraus, wie z.B.

Polyetherdiol des Molekulargewichts 4000, hergestellt durch Propoxylierung von Propylenglykol und anschließende Ethoxylierung des Propoxylierungsprodukts (PO-EO-Gewichtsverhältnis = 70 : 30),

Polyethertriol des Molekulargewichts 6200, hergestellt durch Propoxylierung von Trimethylolpropan und anschließende Ethoxylierung des Propoxylierungsprodukts (PO-EO-Gewichtsverhältnis = 80 : 20),

Polyethertriol des Molekulargewichts 4800, hergestellt durch Propoxylierung von Trimethylolpropan und anschließende Ethoxylierung des Propoxylierungsprodukts (PO-EO-Gewichtsverhältnis = 85 : 15) sowie

mit 20 Gew.-% bezogen auf Gesamtgewicht, Styrol/ Acrylnitril (Gewichtsverhältnis = 40 : 60) gepfropftes Polyethertriol, welches durch Propoxylierung von Trimethylolpropan und anschließende Ethoxylierung des Propoxylierungsprodukts (PO-EO-Gewichtsverhältnis = 85 : 15) hergestellt worden war, mit einem Molekulargewicht von 6000.

Dabei sind auch handelsübliche Polyole, wie z.B. die bei der Bayer MaterialScience AG unter den Namen Arcol®, Desmophen®, Hyperlite®, Baygal® oder Ultracel® erhältlichen Polyole, einsetzbar.

Als Di- oder Polyisocyanate im Sinne der Erfindung sind alle bekannten aliphatischen sowie aromatischen Isocyanate einsetzbar.

Die bevorzugten Vertreter dieser aromatischen Isocyanate sind:
Toluylendiisocyanat (TDI ),
Diphenylmethandiisocyanat (MDI) und/oder
polymeres Diphenylmethandiisocyanat (PMDI) und
als aliphatischen Isocyanate:
   4,4'-Diisocyanatodicyclohexylmethan (H12MDI) und sowie dessen Derivate und/oder Isocyanate auf Basis von Hexamethylendiisocyanat (HMDI), wie z.B. Trimerisate, HMDI-Uretdione, Allophanate, Isocyanurate, Biurete etc., wobei der Anteil an HMDI vorzugsweise < 0,15 Gew% sein soll (monomerenfrei) und/oder Isocyanate auf Basis von Isophorondiisocyanat (IPDI), wie z.B. Trimerisate, Allophanate, IPDI-Uretdione, etc., wobei der Anteil an IPDI vorzugsweise < 0,15 Gew% sein soll (monomerenfrei).

Dabei handelt es sich um handelsübliche Produkte, die z.B. bei der Bayer MaterialScience AG unter dem Handelsamen Desmodur® und Baymidur®, der BASF AG unter dem Handelsnamen Basonat ® oder bei der Evonik AG unter Vestanat® vertrieben werden.

Die als Di- oder Polyisocyanate im Sinne der Erfindung eingesetzten Verbindungen sind vorzugsweise bei 20°C flüssig und weisen einen NCO-Gehalt von 10 bis 33,6 %, vorzugsweise von 20 bis 30 Gew.-% auf.

Es kann sich dabei auch um mindestens ein, gegebenenfalls chemisch modifiziertes Polyisocyanat oder Polyisocyanatgemisch der Diphenylmethanreihe handeln. Hierunter sind insbesondere 4,4'-Diisocyanatodiphenylmethan, dessen technische Gemische mit 2,4'-Diisocyanatodiphenylmethan und gegebenenfalls 2,2'-Diisocyanatodiphenylmethan, Gemische dieser Diisocyanate mit ihren höheren Homologen, wie sie bei der Phosgenierung von Anilin/ Formaldehyd-Kondensaten anfallen und/oder bei der destillativen Aufarbeitung von derartigen Phosgenierungsprodukten erhalten werden, zu verstehen. Bei der vorgenannten chemischen Modifizierung dieser Polyisocyanate handelt es sich insbesondere um die bekannte Urethan-Modifizierung, z. B. durch Umsetzung von bis zu 30 Äquivalentprozent der vorliegenden NCO-Gruppen mit Polypropylenglykolen eines maximalen Molekulargewichts von 700 oder um eine an sich bekannte Carbodiimidisierung von bis zu 30 % der vorliegenden NCO-Gruppen.

Des Weiteren sind die folgenden Polyisocyanate bevorzugt, wie z.B. ein mit Tripropylenglykol verflüssigtes 4,4'-Diphenylmethandiisocyanat mit einem NCO-Gehalt von 23 %, NCO-Prepolymere mit einem NCO-Gehalt von 20,2 %, hergestellt durch Umsetzung von (i) 56 Gew.-Teilen 4,4'-Diisocyanatodiphenylmethan (4,4'-MDI) und 1 Gew.-Teilen. eines modifizierten 4,4'-MDI mit einem NCO-Gehalt von 30 %, hergestellt durch parallele Carbodiimisierung der NCO-Gruppen, mit (ii) einem Gemisch aus 21 Gew.-Teilen Polypropylenglykol der OH-Zahl 56 und 6,7 Gew.-Teilen Tripropylenglykol;

Polyisocyanatgemische mit einem NCO-Gehalt von 28 % und einer Viskosität (25°C) von 130 mPas bestehend aus gleichen Gewichtsteilen (i) eines Polyisocyanats mit einem NCO-Gehalt von 24, 5 % und einer Viskosität (25°C) von 500 mPa.s das durch Phosgenierung eines Anilin/Formaldehyd-Kondensats und anschließende Umsetzung des Phosgenierungsprodukts mit Polypropylenglykol der OH-Zahl 515 erhalten wurde, und (ii) einem Polyisocyanatgemisch der Diphenylmethanreihe mit einem NCO-Gehalt von 31,5 % und einem Gehalt an Diisocyanatodiphenylmethan-Isomeren von 60 % (94 % 4,4-, 5 % 2,4- und 1 % 2,2'-Isomer) und höherkernigen Homologen von 40 %.

Bei dem eingesetzten Eisen(III)acetylacetonat im Sinne der Erfindung handelt es sich um eine handelsübliche Substanz, z.B. erhältlich bei der Firma Sigma-Aldrich. Das Eisen(III)acetylacetonat wird vorzugsweise in Form einer 0,05-10%igen Lösung in dem Diamin bzw. dem monofunktionellen Polyol eingesetzt.

Bei dem Diamin im Sinne der Erfindung handelt es sich um Verbindungen der Formel

NHR-R'-NHR",

mit R und R"= Methyl, Ethyl, Propyl, wobei R und R" gleich oder verschiedenen sein können und R' = C₁ - C₁₈ -Alkylen-, C₆- Arylen- C₁₂- Arylen oder C₇ -C₁₃ -Alkylarylen.

Dabei ist N,N'-Bis(sec-butylamino)diphenylmethan besonders bevorzugt. Auch hier handelt es sich um eine im Handel erhältliche Substanz, die z.B. als Ethacure® 420 bei der Firma Albemarle Corp. bezogen werden kann.

Bei dem monofunktionellen Polyol im Sinne der Erfindung handelt es sich vorzugsweise um monofunktionelle Polyole auf Ethylenoxid-Basis, wie z.B. Polyethylenglycol-Mono- C₁-C₁₈-Alkylether, wie z.B. Monomethylether oder Monoethylether, erhältlich bei der Firma Clariant International Ltd. oder Polyethylen/Polypropylenglycol- Mono-C₁-C₁₈-Alkylether.

In einer weiteren, ebenfalls bevorzugten Ausführungsform der vorliegenden Erfindung enthalten die Polyurethangießmassen weitere Hilfs- und Zusatzmittel, wie z.B. Stabilisatoren oder auch sonstige halogenfreie Treibmittel, wie insbesondere Wasser, welches gegebenenfalls in einer Menge von 0 bis zu 5 Gew.-%, bezogen auf das Gewicht des Polyetherpolyols, mitverwendet wird.

Die im Sinne der Erfindung eingesetzten Kettenverlängerungsmittel (Vernetzer) sind vorzugsweise difunktionell und besitzen ein Molekulargewicht im Bereich von 62 bis 1999, vorzugsweise 62 bis 400. Falls es sich um keine definierten Verbindungen handelt, bezieht sich diese Angabe bezüglich des Molekulargewichts ebenfalls auf den aus OH-Funktionalität und OH-Gehalt errechneten Wert.

Zu den bevorzugten Kettenverlängerungsmitteln gehören einfache zweiwertige Alkohole eines unter 200 liegenden Molekulargewichts, wie beispielsweise Ethylenglykol, Diethylenglycol, Dipropylenglycol, 1,4-Butandiol, 1,6-Hexandiol oder Gemische derartiger einfacher Diole. Als Kettenverlängerungsmitteln ebenfalls geeignet sind den gemachten Angaben bezüglich des Molekulargewichts entsprechende Ethergruppen aufweisende Diole, wie sie durch Propoxylierung und/oder Ethoxylierung von zweiwertigen Startermolekülen der bereits oben beispielhaft genannten Art zugänglich sind.

Als Kettenverlängerungsmitteln (Vernetzer) ebenfalls geeignet sind aromatische Amine mit sterisch gehinderten Aminogruppen, wie insbesondere 1-Methyl-3,5-diethyl-2,4-diaminbenzol und dessen technischen Gemische mit 1-Methyl-3,5-diethyl-2,6-diaminobenzol (DETDA) sowie 3,5-Dimethylthio-2,6-toluyldiamin und 3,5-Dimethylthio-2,4-toluyldiamin und Gemische daraus. Beliebige Gemische der beispielhaft genannten Kettenverlängerungsmittel können ebenfalls eingesetzt werden. Die Kettenverlängerungsmittel werden beim erfindungsgemäßen Verfahren in Mengen von 0 bis 15, vorzugsweise 4 bis 12 Gew.-%, bezogen auf das Gewicht des Polyetherpolyols eingesetzt.

Die Ausgangskomponenten, d.h. Polyetherpolyol, gegebenenfalls vorhandenes Wasser und gegebenenfalls vorhandener Vernetzer, werden vorzugsweise in solchen Mengen eingesetzt, die einer Isocyanat-Kennzahl von 80 bis 120, vorzugsweise 100 bis 105, entsprechen.

Ebenfalls bevorzugt ist der Einsatz von weiteren Additiven, wie z. B. physikalischen Treibmitteln und/oder Schaumstabilisatoren. Einsetzbar als physikalisches Treibmittel sind alle gängigen PU-Treibmittel, wie z.B. HFC 245-fa und HFC-365mfc, erhältlich bei der Firma Ineos Europe Ltd. In diesen Fällen sind Mengen von 0,5 bis 15 Gew.%, bezogen auf das Polyol, bevorzugt. Ebenfalls einsetzbar sind Organosilicone als Schaumstabilisatoren, wie z.B. Tegostab B8719 erhältlich bei der Evonik AG. Diese Schaumstabilisatoren können in Mengen von 0,3 bis 2 Gew. %, bezogen auf das Polyol, eingesetzt werden.

Zudem können Hilfsmittel, wie Füllstoffe, vorzugsweise Kreide, Quarzmehl und/oder flammhemmende Stoffe, wie z.B. Melamin oder organische Phosphorsäureester, einsetzt werden. Hierbei handelt es sich um kommerziell verfügbare Produkte.

Füllstoffe als Hilfsmittel können in Mengen von 0 - 60 Gew. % und die flammhemmenden Stoffe in Mengen von 0 - 30 Gew % eingesetzt werden.

Zur Herstellung des PU-Gießmassen werden dabei die Edukte vorzugsweise in folgenden Mengenverhältnissen umgesetzt:
100 Teile Polyetherpolyol
10 -80 Teile Di- oder Polyisocyanat
0,05-5 Teile einer 0,5-10 %ige Lösung von Eisen(III)acetylacetonat gelöst in mindestens einem Diamin oder mindestens einem monofunktionellen Polyol
sowie 0 - 5 Teile Wasser und/oder 0 bis 15 Teile Kettenverlängerungsmittel,
wobei im Fall PU-Schaums 0,5 - 5 Teile Wasser und/oder 0 bis 15 Teile Kettenverlängerungsmittel
und im Fall des kompakten Polyurethankörpers 0 Teile Wasser, und 0,5 bis 15 Teile Kettenverlängerungsmittel eingesetzt werden.

Im Fall der kompakten Polyurethankörper können 0 - 60 Gew. % an Füllstoffen und/oder

0 - 30 Gew.% an flammhemmenden Stoffe als Hilfsmittel eingesetzt werden. Ebenso können im Fall der kompakten Polyurethankörper wasserabsorbierende Mittel zugesetzt werden. Diese Mittel sind zum Beispiel physikalisch absorbierende Stoffe wie Zeolithe (Grace) oder chemisch wasserbindende Stoffe wie P-Toluolsulfonyl-isocyanat (Zusatzmittel TI von der OHG Borchers GmbH) oder Orthoformiate wie Zusatzmittel OF der OHG Borchers GmbH).

Im Fall der Polyurethanschäume können 0,3 bis 2 Gew. % an Schaumstabilisatoren, 0,5 bis 15 Gew.% an physikalischen Treibmitteln (Additiven), 0 - 60 Gew. % an Füllstoffen und/oder 0 - 30 Gew.% an flammhemmenden Stoffe als Hilfsmittel eingesetzt werden.

Die Umsetzung zu den erfindungsgemäßen Polyurethangießmassen erfolgt dabei vorzugsweise in Anwesenheit von Wasser und/oder Kettenverlängerungsmittel, wobei folgende Zugabereihenfolge bevorzugt ist:
Polyetherpolyol wird vorgelegt. In das vorgelegte und gegebenenfalls vorgewärmte Polyetherpolyol wird das in mindestens einem Diamin oder mindestens einem monofunktionellen Polyol gelöste Fe(III)Acac zugerührt, danach gegebenenfalls Wasser und/oder Kettenverlängerungsmittel zudosiert und im Anschluss das Di- oder Polyisocyanat zugegeben.

Hierbei bedient man sich üblicher Mess- und Dosiervorrichtungen. Ebenfalls bevorzugt ist, dass die Zugabe der Edukte unter Rühren erfolgt.

Im Fall der Anwesenheit von weiteren Additiven und/oder Hilfsmitteln werden diese vorzugsweise vor der Zugabe des Di- oder Polyisocyanats zugegeben.

Die Temperatur der Reaktionskomponenten (Polyisocyanatkomponente bzw. Polyolkomponente) liegt im allgemeinen innerhalb des Temperaturbereichs von 20 bis 50 °C.

Gegenstand der vorliegenden Erfindung ist daher auch ein Verfahren zur Herstellung der erfindungsgemäßen Polyurethangießmassen, wonach zu dem vorgelegten Polyetherpolyol, was vorzugsweise auf eine Temperatur von 50°C erwärmt wird, das in mindestens einem Diamin oder mindestens einem monofunktionellen Polyol gelöste Fe(III)Acac zugerührt wird und nach der Zudosierung von Wasser und/oder Kettenverlängerungsmittel das Di- oder Polyisocyanat zugegeben wird.

Hierbei bedient man sich üblicher Meß- und Dosiervorrichtungen. Ebenfalls bevorzugt ist, dass die Zugabe der Edukte unter Rühren erfolgt.

Im Fall der Herstellung der erfindungsgemäßen Polyurethangießmassen in Form von Schäumen wird zu dem vorgelegten Polyetherpolyol das in mindestens einem Diamin oder mindestens einem monofunktionellen Polyol gelöste Fe(III)Acac zugerührt und nach der Zudosierung von Wasser und/oder Kettenverlängerungsmittel das Di- oder Polyisocyanat zugegeben.

Im Fall der Herstellung der erfindungsgemäßen Polyurethangießmassen in Form von kompakten Polyurethanmassen wird zu dem vorgelegten Polyetherpolyol das in mindestens einem Diamin oder mindestens einem monofunktionellen Polyol gelöste Fe(III)Acac zugerührt und nach der Zudosierung von Kettenverlängerungsmittel das Di- oder Polyisocyanat zugegeben.

In beiden vorgenannten Verfahren können bei der Umsetzung auch die vorgenannten Additive und Hilfsmittel zugegeben werden, d.h. im Fall der kompakten Polyurethankörper 0 - 60 Gew. % an Füllstoffen und/oder 0 - 30 Gew.% an flammhemmenden Stoffen und m Fall der Polyurethanschäume 0,3 bis 2 Gew. % an Schaumstabilisatoren, 0,5 bis 15 Gew.% an physikalischen Treibmitteln (Additiven) , 0 - 60 Gew. % an Füllstoffen und/oder 0 - 30 Gew.% an flammhemmenden Stoffen als Hilfsmittel. Dies erfolgt vorzugsweise vor der Zugabe des Di- oder Polyisocyanats.

Die Temperatur der Reaktionskomponenten (Polyisocyanatkomponente bzw. Polyolkomponente) liegt im allgemeinen innerhalb des Temperaturbereichs von 20 bis 50 °C.

Besonders bevorzugt sind Temperaturen von 40 - 50° C.

Ein weiterer Gegenstand der Erfindung ist zudem die Verwendung der Polyurethangießmassen, insbesondere in Form von Schäumen, im Baubereich, insbesondere im Bereich des Straßenbaus, besonders bevorzugt im Bereich des Schienenbaus und für die Gleisbetten.

Dabei zeigen die erfindungsgemäßen Polyurethangießmassen neben der erhöhten Witterungsbeständigkeit außen und hinter Fensterglas auch eine erhöhte Lichtbeständigkeit.

Damit sind diese sowohl draußen als auch hinter Fensterglas einsetzbar.

Die nachfolgenden Beispiele dienen der Erläuterung der Erfindung, ohne dabei limitierend zu wirken.

### Ausführungsbeispiele:

Es wurden 4 verschiedene PU-Gießmassen aus in der Tabelle 1 aufgeführten Edukten hergestellt.

Als Polyol A wurde eine 1:1 Mischung aus einem bifunktionellen Polyetherpolyol mit einem trifunktionellen Polyetherpolyol mit OH-Zahl zwischen 20 und 50 eingesetzt, die zusätzlich 7 Gew.% 1,4-Butandiol enthält.

**Tabelle 1: Einsatzstoffe**

| **Einsatzstoffe für Probe Nr.** | **1 (VV)** | **2 (E)** | **3 (E)** | **4 (VV)** |
|---|---|---|---|---|
| Polyol A | 98 | 98 | 98 | 98 |
| Kosmos ® EF, ein Sn(II)-Rizinoleat (Reinstoff) | 0,5 (0,5) | | | 0,4 (0,4) |
| PEG M 500 mit 3% Fe(III)Acac (Wirkstoffgehalt) | | 0,734 (0,02202) | | |
| Ethacure ® 420 mit 6 % Fe(III)Acac | | | 0,4 (0,024) | |
| Wasser | 0,3 | 0,3 | 0,3 | 0,3 |
| Desmodur® PF | 57,9 | 57,9 | 57,9 | 57,9 |

Alle Angaben sind in pphp = parts per 100 parts ofpolyol

Es wurden die folgenden Abkürzungen benutzt:
PEG M 500 = Polyethylenglycol-Monomethylether, MW 500 von der Firma Clariant International Ltd.
Ethacure® 420 = N,N'-Bis(sec-butylamino)diphenylmethan, der Firma Albemarle Corp.
Kosmos® EF, ein Sn(II)-Rizinoleat (Reinstoff), erworben bei der Firma Evonik Goldschmidt GmbH
Fe(III)Acac = Eisen(III)acetylacetonat, erhalten bei Chemikalienhandel.
Desmodur ® PF = modifiziertes reines 4,4'- Diphenylmethandiisocyanat (MDI) mit ca. 23% NCO
VV = Vergleichsversuch, E = erfindungsgemäß

Die 4 PU-Gießmassen wurden wie folgt hergestellt: In einem Rührbecher wurde Polyol A vorgelegt und auf eine Temperatur von 50°C erwärmt. Anschließend wurden je nach Probennummer Kosmos ® EF, PEG M 500 mit 3% Fe(III)Acac bzw. Ethacure ® 420 mit 6 % Fe(III)Acac zugerührt und anschließend Wasser zudosiert. Diese Mischungen wurden ca. 30 Sekunden nachgerührt. Im Anschluss daran wird das auf 40°C aufgeheizte Desmodur® PF zugegeben und ca. 5 Sekunden nachgerührt. Nach weiteren 5 -10 Sekunden begann das Aufschäumen. Nach etwa 1 Minute hat der Schaum seine maximale Höhe erreicht. Zum vollständigen Aushärten wurden die Proben ca. 1 Stunde bei 80° C im Trockenschrank gelagert und für den nachstehend beschriebenen Alterungstest in Scheiben mit den Maßen (Höhe: ca. 80 mm, Breite: ca. 60 mm und Dicke: ca. 7 mm) geschnitten.

Die PU-Werkstoffe wurde dabei folgendem dem für bewitterte Anwendungen typischen Alterungstest unterzogen, siehe Tabelle 2:
Dabei wurde ca. die Hälfte der Scheibe mit Alufolie abgedeckt.

**Tabelle 2: Bedingungen des Alterungstests, bei dem über 355 h Gesamttestzeit immer eine 102 minütige Trockenperiode von einer 18 minütigen Beregnungsphase abgewechselt wird.**

| **UV-Alterung** | |
|---|---|
| Gerät | Xenotest^{®} Alpha LM |
| Belichtungszeit | 355 h |
| Bestrahlungsstärke | 60 W/m² |
| Schwarzstandardtemperatur | 65°C |
| Prüfkammertemperatur | 38 °C |
| relative Luftfeuchtigkeit | 50% |

Nach der Testphase über 355 h waren alle 4 Muster verfärbt und an der Oberfläche verhärtet, hatten aber noch keine Substanz verloren.

Der verhärtete Bereich konnte leicht abgekratzt werden. Die Menge an abgekratztem verhärtetem Schaum wurde gewogen und auf die betroffene Fläche berechnet

| | | | | |
|---|---|---|---|---|
| Probe Nr. | 1 (VV) | 2 (E) | 3(E) | 4 (VV) |
| Abriebverlust mg | 122 | 15 | 25 | 160 |
| bestrahlte Fläche cm² | 23,65 | 24,6 | 21,96 | 25,01 |
| spez. Verlust mg/cm² | 5,16 | 0,61 | 1,14 | 6,40 |

Summe Verlust Sn-Kat: 11,56 (5,16 + 6,4)
Summe VerlustFe(III)Acac: 1,75 (0,61 + 1,14)

Der Verlust nach Bewitterung beträgt bei Fe(III)Acac nur ca. 15% des Verlustes von Zinn-Rizinoleat.

Die katalytische Wirkung war gut. Ein Bewitterungstest mit so hergestelltem Schaum hat überraschenderweise ein wesentlich besseres Ergebnis gezeigt als ein Vergleichsschaum, der mit einem Zinnkatalysator hergestellt wurde.

## Patentansprüche

1. Polyurethangießmassen, erhältlich durch Umsetzung von
- 100 Teilen mindestens eines Polyetherpolyols,
- 10 - 80 Teilen mindestens einem Di- oder Polyisocyanat in Gegenwart von
- 0,05 - 5 Teilen einer 0,5 bis 10 %igen Lösungen von Eisen(III)acetylacetonat gelöst in
- mindestens einem Diamin der Formel
NHR-R'-NHR",
mit R und R"= Methyl, Ethyl, Propyl, wobei R und R" gleich oder verschiedenen sein können und R' = C₁ - C₁₈ -Alkylen-, C₆- Arylen- C₁₂- Arylen oder C₇ -C₁₃ _Alkylarylen oder mindestens einem monofunktionellen Polyetherpolyol
gegebenenfalls in Gegenwart von Wasser und/oder mindestens einem Kettenverlängerungsmittel.

2. Polyurethangießmassen nach Anspruch 1, **dadurch gekennzeichnet, dass** es sich bei dem Polyetherpolyol um bi-/tri- oder höherfunktionelle Polyetherpolyole mit einer OH-Zahl im Bereich von 20 bis 85 mit einem Molekulargewicht von 2000 bis 10 000 handelt.

3. Polyurethangießmassen nach einem der Ansprüche 1 bis 2, **dadurch gekennzeichnet, dass** als Di- oder Polyisocyanat Toluylendiisocyanat (TDI), Diphenylmethandiisocyanat (MDI) und/oder polymeres Diphenylmethandiisocyanat (PMDI) und/oder als aliphatisches Isocyanat 4,4'-Diisocyanatodicyclohexylmethan (H12MDI) und/oder mindestens ein Isocanat auf Basis von Hexamethylendiisocyanat (HMDI) oder auf Basis von Isophorondiisocyanat (IPDI) eingesetzt wird.

4. Polyurethangießmassen nach einem oder mehreren der Ansprüche 1 bis 3, **dadurch gekennzeichnet, dass** als Diamin N,N'-Bis(sec-butylamino)diphenylmethan eingesetzt wird.

5. Polyurethangießmassen nach einem oder mehreren der Ansprüche 1 bis 4, **dadurch gekennzeichnet, dass** als monofunktionelles Polyol Polyethylenglycol-Mono-C₁-C₁₈-Alkylether und/oder Polyethylen/Polypropylenglycol-Mono-C₁-C₁₈-Alkylether eingesetzt wird.

6. Polyurethangießmassen nach einem oder mehreren der Ansprüche 1 bis 5, **dadurch gekennzeichnet, dass** diese zusätzlich mindestens ein physikalisches Treibmittel und/oder einen Schaumstabilisator und/oder weitere Hilfsmittel und / oder Additive enthalten.

7. Verfahren zur Herstellung von Polyurethangießmassen nach einem oder mehreren der Ansprüche 1 bis 6, **dadurch gekennzeichnet, dass** Polyetherpolyol vorgelegt wird und dazu mindestens ein in mindestens einem Diamin oder in mindestens einem monofunktionellen Polyol gelöstes Eisen(III)acetylacetonat zugerührt wird und nach der Zudosierung von Wasser und/oder mindestens einem Kettenverlängerungsmittel das Di- oder Polyisocyanat zugegeben wird.

8. Verwendung der Polyurethangießmassen nach einem oder mehreren der Ansprüche 1 bis 7 im Baubereich.
